# EUROPÄISCHE PATENTSCHRIFT

(11) **EP 3 803 519 B1**
(45) Veröffentlichungstag und Bekanntmachung des Hinweises auf die Patenterteilung: **09.10.2024**
(21) Anmeldenummer: 19739849.8
(22) Anmeldetag: 07.06.2019
(51) Int. Cl.: G05B 19/4067

(54) **VERFAHREN ZUM BETREIBEN EINES INDUSTRIEROBOTERS SOWIE STEUERVORRICHTUNG HIERFÜR**
METHOD FOR OPERATING AN INDUSTRIAL ROBOT AND CONTROL DEVICE THEREFOR
PROCÉDÉ DE FONCTIONNEMENT D'UN ROBOT INDUSTRIEL AINSI QUE DISPOSITIF DE COMMANDE ASSOCIÉ

(30) Priorität: 11.06.2018 AT 504622018
(43) Veröffentlichungstag der Anmeldung: 14.04.2021
(73) Patentinhaber: KEBA Industrial Automation GmbH, 4040 Linz (AT)
(72) Erfinder: REITER, Matthias, 4210 Gallneukirchen (AT); SCHININGER, Manfred, 4030 Linz (AT)
(74) Vertreter: Burger, Hannes
(86) Internationale Anmeldenummer: PCT/AT2019/060190
(87) Internationale Veröffentlichungsnummer: WO 2019/237138

(56) Entgegenhaltungen:
- EP-A1- 1 978 428
- EP-A2- 0 049 151
- WO-A1-2010/069369

## Beschreibung

Die Erfindung betrifft ein Verfahren zum Betreiben eines Industrieroboters mittels zumindest einer elektronischen Steuervorrichtung sowie eine zur Ausführung dieses Verfahrens eingerichtete, elektronische Steuervorrichtung.

Die EP1978428A1 beschreibt einen Roboter gemäß dem einleitenden Teil von Anspruch 1. Bei diesem Roboter werden die Programmfortschritte oder die X-/Y-Koordinaten des gesteuert bewegbaren Arbeitsmittels fortlaufend in einer nicht-flüchtigen Speichervorrichtung mitgeschrieben werden, um den Bearbeitungsvorgang nach einer unvorhergesehenen Unterbrechung des Bearbeitungsvorganges an der zuletzt noch abgeschlossenen Bearbeitungsposition fortsetzen zu können und dadurch einen Neustart erübrigen zu können bzw. verschwendete Werkstücke oder Ausschussteile vermeiden zu können.

Es ist bekannt, Industrieroboter oder vergleichbare Manipulatoreinheiten unter Einbeziehung von Ablaufprogrammen automatisiert zu betreiben, wobei eine Reihe von Sicherheitsvorkehrungen zu treffen und einzuhalten sind, um eine Gefährdung von Personen und eine Beschädigung von Sachgegenständen in Zusammenhang mit dem Betrieb dieser Maschinen bestmöglich auszuschließen.

Erhöhte Anforderungen bestehen auch nach einem Stromausfall bzw. nach einer abrupten Unterbrechung der Energieversorgung, nachdem in solchen Fällen die Synchronität zwischen den steuerungstechnischen Zustandsmodellen und den tatsächlichen Zuständen des Industrieroboters verloren gehen kann. Besonders problematisch sind dabei Strom- bzw. Energieausfälle während dem laufenden Betrieb des Industrieroboters. Dabei ist dessen Steuervorrichtung plötzlich spannungslos, nach dem Federspeicher-Prinzip aufgebaute Haltebremsen fallen automatisch ein und der Industrieroboter trudelt quasi aus. Diese letzten Bewegungssequenzen können von der Steuervorrichtung nicht mehr registriert werden. Die letzten der Steuervorrichtung bekannten Referenzpositionen des Industrieroboters sollten daher nach dem Wiedereinschalten nicht übernommen werden, wenn eine sichere Wiederinbetriebnahme des Industrieroboters gewährleistet sein soll. Da Stromausfälle zu zufälligen Zeitpunkten auftreten und/oder durch nicht vorhersehbare, fehlerhafte Handlungen von Personen eintreten können, würden organisatorische Maßnahmen keine echte Abhilfe darstellen. Vielmehr wird daher im Falle von plötzlichen Stromunterbrechungen und der anstehenden Wiederinbetriebnahme vorgeschrieben, vorab eine manuelle Kalibier- bzw. Referenzierfahrt mit dem Industrieroboter auszuführen. Dabei kann unter anderem gefordert sein, einen im Raum definiert positionierten Referenzierschalter unter Einhaltung vorgegebener Kriterien anzufahren. Dies kann zeitaufwändig und mühsam sein, vor allem wenn wiederholt Neureferenzierungen vorzunehmen sind.

Um solche Referenzierfahrten zu erübrigen, ist es grundsätzlich denkbar, den Bewegungsachsen des Industrieroboters einfehlersichere bzw. hochsichere, d.h. in besonders sicherer Technik ausgeführte Absolutwert-Positionsgeber zuzuordnen und bei jeder Inbetriebnahme die Werte dieser Absolutwert-Positionsgeber auszulesen und zu verarbeiten. Um eine hohe Messauflösung zu erzielen, müssen solche Absolutwert-Positionsgeber häufig als sogenannte Multiturn-Drehgeber ausgeführt sein, bei welchen durch zusätzliches Messen der Anzahl der Umdrehungen ein größerer Messbereich als 360° zur Verfügung steht. Solche Absolutwert-Positionsgeber zusätzlich in sicherer Technik, beispielsweise zweikanalig auszuführen, ist kostenintensiv. Aufgrund der hohen technischen Komplexität steigt aber auch die Fehler- bzw. Ausfallswahrscheinlichkeit solcher in sicherer Technik ausgeführter Absolutwert-Positionsgeber. Ohne sichere Absolutwert-Positionsgeber ist es aber nicht möglich, nach dem Wiedereinschalten eines Industrieroboters einen sicheren Positions-Absolutwert aus den Positionsgebern auszulesen und somit die Stellung der Achsen des Industrieroboters sicher zu erfassen.

Weiters ist es denkbar, batteriegepufferte Ausführungen vorzusehen bzw. unterbrechungsfreie Stromversorgungen (USV-Systeme) zu implementieren. Zumindest die Positionsgeber an den maßgeblichen Bewegungsachsen und die Steuervorrichtung müssten dabei ohne Unterbrechung zumindest während einer ausreichend langen Überbrückungsphase mit elektrischer Energie gespeist werden. Solche Vorkehrungen sind jedoch technisch komplex, aufwändig, teuer und auch wartungsintensiv.

Aufgabe der vorliegenden Erfindung war es, die Nachteile des Standes der Technik zu überwinden und ein Verfahren bzw. eine Vorrichtung zur Verfügung zu stellen, mittels derer ein Anwender zumindest in Einzelfällen in der Lage ist, nach einer unvorhergesehenen Energieunterbrechung bzw. nach einem plötzlichen Stromausfall gegenüber einem Industrieroboter eine rasche und trotzdem möglichst betriebssichere Wiederinbetriebnahme des Industrieroboters vorzunehmen.

Diese Aufgabe wird durch ein Verfahren und eine Vorrichtung gemäß den Ansprüchen gelöst.

Erfindungsgemäß ist ein Verfahren zum Betreiben eines Industrieroboters mittels zumindest einer elektronischen Steuervorrichtung vorgesehen, wobei das Verfahren folgende Verfahrensschritte umfasst:
- Ausführen von Bewegungen des Industrieroboters mittels mehrerer Bewegungsantriebe des Industrieroboters, welche Bewegungsantriebe von der Steuervorrichtung angesteuert werden;
- fortlaufendes Speichern von Positionsdaten eines Werkzeugmittelpunktes (TCP) des Industrieroboters, und vorzugsweise der Orientierung eines Endeffektors des Industrieroboters, in einer Positionsdatenspeichervorrichtung, wobei ein optionaler, einhergehender Erfassungs- bzw. Verarbeitungsschritt anhand von Werten von Inkremental- und/oder Absolutwertgebern der Bewegungsantriebe vorgenommen werden kann und/oder anhand von Positionsdaten vorgenommen werden kann, welche der Steuervorrichtung anhand der laufenden Verarbeitungen ohnehin jeweils bekannt sind;
- fortlaufendes Erfassen bzw. Verarbeiten von Geschwindigkeiten von allen Bewegungsantrieben des Industrieroboters, wobei eine solche Geschwindigkeitserfassung auch den Wert "Null" umfasst und somit ein explizites Eruieren bzw. Prüfen beinhaltet, ob ein kompletter Stillstand aller maßgeblichen Bewegungsachsen des Industrieroboters gegeben ist oder nicht;
- fortlaufendes Erfassen bzw. Verarbeiten von Brems-Zuständen im Sinne von Ist-Zuständen von Bremsvorrichtungen an allen bzw. für sämtliche der Bewegungsantriebe des Industrieroboters, wodurch abgefragt wird bzw. erhoben werden kann, ob alle maßgeblichen Bewegungsachsen bzw. deren Bewegungsantriebe zusätzlich auch eingebremst sind bzw. tatsächlich im eingebremsten Zustand vorliegen.

Darüber hinaus ist das erfindungsgemäße Verfahren dadurch gekennzeichnet, dass die jeweiligen Geschwindigkeitszustände von allen Bewegungsantrieben als Geschwindigkeits-Kennwerte fortlaufend in wenigstens einer nicht-flüchtigen Speichervorrichtung gespeichert werden, und dass zudem die jeweiligen Brems-Zustände der Bremsvorrichtungen an allen maßgeblichen Bewegungsantrieben als Bremsen-Kennwerte fortlaufend in der wenigstens einen nicht-flüchtigen flüchtigen (non-volatile) Speichervorrichtung gespeichert werden.

Weiters wird im Zuge einer auszuführenden Wiederinbetriebnahme des Industrieroboters nach einem plötzlichen bzw. unvorhergesehenen Stromausfall oder auch nach einer bewusst oder unbewusst herbeigeführten, abrupten Stromabschaltung gegenüber dem Industrieroboter von der Steuervorrichtung zumindest der zuletzt gespeicherte Geschwindigkeits-Kennwert und auch Bremsen-Kennwert der Bewegungsantriebe des Industrieroboters aus der wenigstens einen nicht-flüchtigen Speichervorrichtung ausgelesen. Weiters werden im Zuge der auszuführenden Wiederinbetriebnahme von der Steuervorrichtung der zumindest eine ausgelesene Geschwindigkeits-Kennwert und Bremsen-Kennwert der Bewegungsantriebe des Industrieroboters evaluiert, und wenn zum Zeitpunkt der Stromunterbrechung die Geschwindigkeit aller Bewegungsantriebe Null war und der Brems-Zustand aller Bremsvorrichtungen auf aktiv gesetzt war, die Wiederinbetriebnahme des Industrieroboters dann auf jenen Positionsdaten beruht, welche (a) zum Zeitpunkt der Wiederinbetriebnahme des Industrieroboters von der Steuervorrichtung von Absolutwert-Positionsgebern an den Bewegungsantrieben auslesbar sind, und/oder (b) aus der Positionsdatenspeichervorrichtung der Steuervorrichtung abrufbar sind,
und andernfalls die Wiederinbetriebnahme des Industrieroboters auf Positionsdaten beruht, welche erst nach einer Durchführung eines Referenzierungs- oder Rekalibriervorganges des Werkzeugmittelpunktes (TCP) des Industrieroboters erzeugt werden.

Das erfindungsgemäße Verfahren bringt den Vorteil mit sich, dass dadurch eine Wiederinbetriebnahme eines Industrieroboters nach einem plötzlichen Stromausfall bzw. nach einer unvorhergesehenen Energieunterbrechung gegebenenfalls ohne dem Erfordernis einer Rekalibrierung der Steuerungsdaten, aber trotzdem unter Erfüllung hoher Sicherheitsstandards vorgenommen werden kann. Gleiches kann für bewusst oder unbewusst herbeigeführte, abrupte Stromunterbrechungen gegenüber dem Industrieroboter bzw. dessen Steuervorrichtung gelten. Insbesondere kann in Abhängigkeit davon, ob der Industrieroboter zum Zeitpunkt des Stromausfalls bzw. kurz davor zumindest hinsichtlich seiner maßgeblichen Antriebe bzw. Bewegungsachsen im Stillstand war und zugleich aktiv eingebremst war, ohne neuer Referenzierung bzw. ohne einem erneuten Abgleichverfahren zwischen den Ist-Positionen des Industrieroboters und den der Steuervorrichtung zugrunde liegenden Steuerungsdaten umgehend wieder in Betrieb genommen werden. Das erfindungsgemäße Verfahren bietet somit eine gewisse Zeitersparnis in Verbindung mit dem Betreiben eines Industrieroboters und kann dadurch außerdem eine komfortable und wirtschaftliche Nutzung eines Industrieroboters unterstützt werden.

Gemäß dem angegebenen Verfahrensablauf ist also eine Vorgangsweise definiert, bei welcher die Parameter "Achsenstillstände" und "Bremsenaktivzustand" während dem laufenden Betrieb des Industrieroboters fortlaufend bzw. in ausreichend kurzen Zeitabständen ermittelt und gesondert in der nicht-flüchtigen Speichervorrichtung hinterlegt werden. Demnach werden also gesonderte bzw. unverknüpfte Zustandsspeicherungen bezüglich "Geschwindigkeit" und "Bremse" vorgenommen. Gemäß einer Ausführungsform im angegebenen Verfahrensablauf kann eine verknüpfte, insbesondere eine UND-verknüpfte Hinterlegung dieser Parameter in der nicht-flüchtigen Speichervorrichtung vorgesehen sein.

Gemäß dem Ablauf von Anspruch 1 erfolgt also keine Speicherung eines "UND-Verknüpfungsergebnisses", sondern eine nachträgliche Auswertung bzw. Verknüpfung im Zuge der Wiederinbetriebnahme des Industrieroboters. Dies benötigt zwar etwas mehr "non-volatile memory", die verfügbaren Diagnosemöglichkeiten sind dabei aber detaillierter bzw. umfassender. Beiden Varianten ist gemeinsam, dass dann, wenn zum Zeitpunkt des Stromausfalles oder der Stromunterbrechung - bzw. unmittelbar davor - alle maßgeblichen Haltebremsen des Industrieroboters aktiv waren und alle Geschwindigkeiten bei den maßgeblichen Bewegungsantrieben bzw. Bewegungsachsen Null waren, die weitere Bewegungssteuerung des Industrieroboters ohne dem Erfordernis eines aufwändigen Rekalibrierungsvorganges rasch wieder fortgesetzt wird bzw. umgehend wieder eingeleitet werden kann.

Durch die erfindungsgemäßen Maßnahmen ist dabei besonders eindeutig und fehlersicher nachvollziehbar, ob der Industrieroboter vor dem Stromausfall sicher gestanden ist und zuverlässig angehalten war, oder ob er sich zum Zeitpunkt des Stromausfalls bewegt hat bzw. nur bedingt sicher im Stillstand war.

Entsprechend einer möglichen Weiterbildung kann vorgesehen sein, dass nach einem Auftreten und einer anschließenden Behebung eines plötzlichen bzw. unvorhersehbaren Stromausfalls, oder auch nach einer bewusst oder unbewusst herbeigeführten Stromabschaltung gegenüber dem Industrieroboter oder dessen Steuervorrichtung, insbesondere nach einem Ausfall und einer Reaktivierung der Energieversorgung, von der Steuervorrichtung aktiv ermittelt bzw. festgestellt wird, ob eine Wiederinbetriebnahme des Industrieroboters vorgesehen ist bzw. vorzunehmen ist.

Es kann dabei auch zweckmäßig sein, wenn die fortlaufend erfassten Geschwindigkeitszustände und die fortlaufend erfassten Brems-Zustände fortlaufend miteinander UND-verknüpft werden, und dass die jeweiligen Verknüpfungsergebnisse dieser fortlaufenden Verknüpfungen als Verknüpfungs-Kennwerte fortlaufend in wenigstens einer nicht-flüchtigen Speichervorrichtung hinterlegt werden, wobei aus den fortlaufend durchgeführten Verknüpfungen ein digitaltechnisch positives Verknüpfungsergebnis resultiert oder ein positiver Verknüpfungs-Kennwert in der nicht-flüchtigen Speichervorrichtung hinterlegt wird, wenn zum Zeitpunkt der Verknüpfungen bei allen Bewegungsantrieben der Stillstandszustand erfüllt ist und bei allen Bremsvorrichtungen, insbesondere bei allen maßgeblichen Bremsvorrichtungen, der Brems-Zustand als aktiv gesetzt ist, andernfalls ein negativer Verknüpfungs-Kennwert in der nicht-flüchtigen Speichervorrichtung hinterlegt wird. Dadurch kann der Speicherbedarf der nicht-flüchtigen Speichervorrichtung gering gehalten werden und können außerdem besonders kurze Schreibzyklen erreicht werden.

Vorteilhaft ist in diesem Zusammenhang weiters, wenn eine Wiederinbetriebnahme des Industrieroboters ohne neuer Referenzierung des Industrieroboters eingeleitet wird, wenn in der nicht-flüchtigen Speichervorrichtung ein positiver Verknüpfungs-Kennwert vorliegt. Dies ermöglicht eine sichere und zugleich relativ rasche bzw. komfortable Wiederinbetriebnahme des Industrieroboters.

Andernfalls kann vorgesehen sein, dass im Zuge einer Wiederinbetriebnahme des Industrieroboters nach einem plötzlichen bzw. unvorhergesehenen Stromausfall oder nach einer abrupten Stromabschaltung die nicht-flüchtige Speichervorrichtung ausgelesen wird, und dass eine Wiederinbetriebnahme des Industrieroboters die Durchführung eines Referenzierungsablaufes zur Ermittlung neu kalibrierter Positionsdaten erfordert, wenn in der nicht-flüchtigen Speichervorrichtung ein negativer Verknüpfungs-Kennwert vorliegt. Sicherheitsrisiken in Zusammenhang mit voneinander abweichenden Ist-Positionen des Industrieroboters gegenüber den der Steuervorrichtung zugrunde liegenden Steuerungsdaten können dadurch ausgeschlossen bzw. minimiert werden. Dieses Szenario betrifft Zustände, in welchen entweder eine der Achs-Bremsen bzw. Antriebs-Bremsen unmittelbar vor dem Stromausfall bzw. zu Beginn der Stromunterbrechung nicht aktiv war, oder eine der Achsen- bzw. Antriebs-Geschwindigkeiten nicht Null war.

Vorteilhaft ist auch eine Ausprägung, gemäß welcher die jeweiligen Geschwindigkeitszustände der Bewegungsantriebe von der Steuervorrichtung mittels in sicherer Technik ausgeführter, beispielsweise zweikanaliger, Inkrementalwert-Positionsgeber an den Bewegungsantrieben oder Bewegungsachsen erfasst werden. Dadurch können die jeweiligen Ist-Zustände der Bewegungsantriebe bzw. der Roboterachsen mit hoher technischer Zuverlässigkeit bzw. unter Erfüllung hoher Sicherheitsstandards ermittelt werden. Insbesondere kann dadurch technisch sicher bzw. hochzuverlässig erfasst werden, ob sich der jeweilige Bewegungsantrieb bzw. die jeweilige Bewegungsachse aktuell bewegt oder nicht bewegt. Dabei ist auch von Vorteil, dass diese technisch hochsichere bzw. besonders zuverlässige Geschwindigkeits- bzw. Stillstandserfassung im Vergleich zu einer technisch sicheren Absolutwert-Positionsverfassung mit vergleichsweise geringem Kostenaufwand erzielbar ist.

Analoge Effekte können dadurch erzielt werden, dass die jeweiligen Brems-Zustände der Bremsvorrichtungen an den Bewegungsantrieben von der Steuervorrichtung mittels sicherer Technik erfasst werden, beispielsweise durch zweikanalige Erfassungsmittel und/oder durch mit diversitärer Technologie aufgebaute Erfassungsmittel.

Gemäß einer praktikablen Ausprägung kann auch vorgesehen sein, dass zumindest einzelnen der Bewegungsantriebe des Industrieroboters in nicht-sicherer Technik ausgeführte Absolutwert-Positionsgeber zugeordnet sind. Dank der erfindungsgemäßen Maßnahmen können relativ kostengünstig aufgebaute Industrieroboter trotzdem unter Erfüllung hoher Sicherheitslevels betrieben werden. Zudem kann dadurch die Wirtschaftlichkeit gesteigert werden. Insbesondere kann trotz Erübrigung von relativ aufwendigen, insbesondere von technisch einfehlersicheren bzw. hochsicheren Absolutwert-Positionsgebern eine rasche und dennoch hoch-sichere Wiederinbetriebnahme eines entsprechenden Industrieroboters erreicht werden.

In diesem Zusammenhang kann auch vorgesehen sein, dass Positionswerte von in nicht-sicherer Technik ausgeführten Absolutwert-Positionsgebern an den Bewegungsantrieben des Industrieroboters von der Steuervorrichtung fortlaufend gespeichert werden, und dass im Zuge einer Wiederinbetriebnahme des Industrieroboters von der Steuervorrichtung überprüft wird, ob zuletzt abgespeicherte Positionswerte der diversen Bewegungsantriebe mit von den Absolutwert-Positionsgebern aktuell ausgelesenen Positionswerten der diversen Bewegungsantriebe übereinstimmen oder nicht übereinstimmen. Dadurch kann ich einfacher und trotzdem ausreichend zuverlässiger Art und Weise festgestellt werden, ob während der Phase der Stromunterbrechung eine durch äußere Kräfte bzw. Maßnahmen verursachte Bewegung bzw. Positionsveränderung des Industrieroboters stattgefunden hat, welche Veränderungen während der Phase der Stromunterbrechung von der Steuervorrichtung nicht bemerkt werden können bzw. nicht erfasst worden wären. Durch diese Prüfroutine kann der Sicherheitslevel des gegenständlichen Betriebsverfahrens nochmals gesteigert werden.

Gemäß einer Ausführungsform ist vorgesehen, dass von der Steuervorrichtung ein datentechnischer, insbesondere ein datenbasierender bzw. steuerungstechnischer Referenzierungsstatus des Industrieroboters geführt wird, wobei der Referenzierungsstatus als "erfüllt" geführt wird, wenn die Ist-Position bzw. tatsächliche Position des Werkzeugmittelpunktes (TCP) des Industrieroboters mit den der Steuervorrichtung zugrunde liegenden Positionsdaten des Werkzeugmittelpunktes (TCP) des Industrieroboters übereinstimmt bzw. synchron ist, und dass der Referenzierungsstatus von der Steuervorrichtung als "nicht erfüllt" geführt wird, wenn die genannte Ist-Position und die genannten Positionsdaten voneinander abweichen. Anhand eines solchen Referenzierungsstatus kann rasch und eindeutig entschieden werden, ob eine sichere Wiederinbetriebnahme des Industrieroboters ohne Ausführung eines Kalibrierungs- bzw. Referenzierungsvorganges ermöglicht ist, oder ob ein Kalibrier- bzw. Referenzierungsvorgang in sicherheitstechnischer Hinsicht zu empfehlen bzw. auszuführen ist.

Außerdem kann vorgesehen sein, dass durch eine organisatorische Betriebsanweisung manuell initiierte Positionsveränderungen des Werkzeugmittelpunktes (TCP) des Industrieroboters, beispielsweise durch ein manuelles Lösen einer der Haltebremsen der Bewegungsantriebe bzw. Bewegungsachsen, untersagt werden, wenn in Verbindung mit einer auszuführenden Wiederinbetriebnahme des Industrieroboters ein manueller Referenzierungsvorgang bzw. eine typischerweise aufwändige Kalibrierfahrt mit dem Industrieroboter erübrigt werden soll. Insbesondere kann mit diesen Maßnahmen ein wirtschaftlicher Betrieb und zudem eine erhöhte Betriebssicherheit erzielt werden.

Gemäß einer weiteren Ausführungsform kann vorgesehen sein, dass von der Steuervorrichtung eine Wiederinbetriebnahme des Industrieroboters ohne Ausführung eines manuellen Referenzierungsvorganges voll- oder teilautomatisch eingeleitet oder umgesetzt bzw. zugelassen wird, wenn die gespeicherten Positionswerte und die zum Zeitpunkt der vorgesehenen Wiederinbetriebnahme des Industrieroboters von den Absolutwert-Positionsgebern ausgelesenen Positionswerte gleich sind. Dadurch ist eine rasche, komfortable und dennoch betriebssichere Wiederinbetriebnahme des Industrieroboters ermöglicht.

Zudem kann vorgesehen sein, dass von der Steuervorrichtung eine Wiederinbetriebnahme des Industrieroboters erst nach einer Ausführung eines manuellen Referenzierungsvorganges eingeleitet oder umgesetzt wird, wenn die gespeicherten Positionswerte im Vergleich zu den von den Absolutwert-Positionsgebern zum Zeitpunkt der vorgesehenen Wiederinbetriebnahme des Industrieroboters ausgelesenen Positionswerten ungleich sind. Sicherheitsrisiken in Verbindung mit einer Inbetriebnahme eines unzureichend referenzierten Industrieroboters können dadurch ausgeschlossen bzw. minimiert werden.

Ferner kann es zweckmäßig sein, wenn von der Steuervorrichtung eine Fehlereintragung in eine Logdatei vorgenommen wird, wenn die gespeicherten Positionswerte im Vergleich zu den von den Absolutwert-Positionsgebern zum Zeitpunkt der vorgesehenen Wiederinbetriebnahme des Industrieroboters ausgelesenen Positionswerten ungleich sind.

Gemäß einer Ausführungsform ist vorgesehen, dass von der Steuervorrichtung eine Rücksetzung bzw. Löschung des Referenzierungsstatus des Industrieroboters vorgenommen wird, wenn die von der Steuervorrichtung gespeicherten Positionswerte im Vergleich zu den von den Absolutwert-Positionsgebern zum Zeitpunkt der vorgesehenen Wiederinbetriebnahme des Industrieroboters ausgelesenen Positionswerten ungleich sind. Potentiell sicherheitskritische Inbetriebnahmen eines nicht-referenzierten Industrieroboters können dadurch automatisiert verhindert werden, oder allenfalls erst nach ausdrücklicher Quittierung durch einen Anwender ausgeführt und/oder protokolliert werden.

Entsprechend einer Weiterbildung kann vorgesehen sein, dass von der Steuervorrichtung ein bevorzugt softwarebasierend umgesetztes, von einer Bedienperson wahlweise aktivier- und deaktivierbares Funktionsmodul ausgeführt wird, welches Funktionsmodul zur wahlweisen Freischaltung und Sperrung einer zumindest teil- oder vollautomatischen Wiederinbetriebnahme des Industrieroboters ohne einem Erfordernis zur Ausführung eines erneuten Referenzierungsvorganges eingerichtet ist. Vorteilhaft ist dabei, dass eine Bedienperson bewusst bzw. aktiv entscheiden kann bzw. muss, ob die Option der teilautomatisierten bzw. vereinfachten Wiederinbetriebnahme des Industrieroboters im Anschluss an einen Stromausfall aktiv oder inaktiv sein soll.

Die Aufgabe der Erfindung wird auch durch eine Steuervorrichtung gemäß den Ansprüchen gelöst. Ein Industrieroboter mit dieser Steuervorrichtung ist zur Ausführung des in den Ansprüchen angegebenen Verfahrens eingerichtet bzw. programmiert. Die damit einhergehenden vorteilhaften Wirkungen und technischen Effekte sind den vorhergehenden und den nachstehenden Beschreibungsteilen zu entnehmen.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines Steuerungssystems für einen beispielhaften, mehrachsigen Industrieroboter;
- Fig. 2: ein Ablaufdiagramm mit einzelnen Aspekten eines Betriebsverfahrens für einen Industrieroboter respektive für dessen Steuervorrichtung;
- Fig. 3a: einen beispielhaften Auszug aus einer nicht-flüchtigen Speichervorrichtung der gattungsgemäßen Steuervorrichtung, gemäß welchem ein erneuter Referenzierungs- oder Rekalibriervorgang des Industrieroboters im Anschluss an einen Stromausfall erübrigt werden kann;
- Fig. 3b: einen beispielhaften Auszug aus einer nicht-flüchtigen Speichervorrichtung der gattungsgemäßen Steuervorrichtung, gemäß welchem ein erneuter Referenzierungs- oder Rekalibriervorgang des Industrieroboters im Anschluss an einen Stromausfall empfehlenswert oder zwingend ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

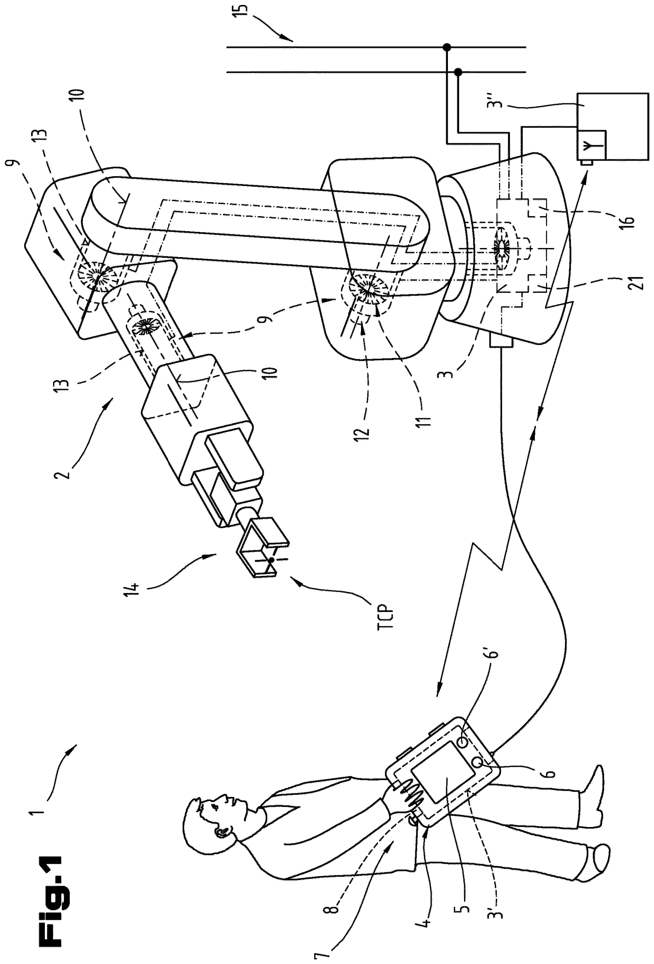

In Fig. 1 ist ein Steuerungssystem 1 schematisch und beispielhaft veranschaulicht, mit welchem eine Programmierung oder Vorgabe von Bewegungen oder Abläufen eines Industrieroboters 2 ermöglicht wird, wobei nach einer entsprechenden Programmierung eine teil- oder vollautomatische bzw. autarke Ausführung von Bewegungen oder Abläufen durch den Industrieroboter 2 ermöglicht ist. Dieser Industrieroboter 2 kann durch eine aus dem Stand der Technik bekannte, mehrachsige Manipulatoreinheit oder durch ein sonstiges Handling-Aggregat gebildet sein, mit welchem technische Prozesse, beispielsweise Schweiß- oder Lackierprozesse oder Handlingprozesse für Werkstücke, automatisiert oder teilautomatisiert ausgeführt werden können.

Dem zumindest einen Industrieroboter 2 innerhalb des Steuerungssystems 1 ist zumindest eine integrierte und/oder externe Steuervorrichtung 3, 3', 3" zugeordnet. Das Steuerungssystem 1 kann durch beliebige aus dem Stand der Technik bekannte, elektrotechnische Steuervorrichtungen 3, 3', 3" gebildet werden, wobei je nach technologischem Bedarf zentrale und/oder dezentrale Steuerungsarchitekturen eingesetzt sein können. Insbesondere kann durch ein Zusammenwirken mehrerer integrierter und/oder externer Steuervorrichtungen 3, 3', 3" ein verteiltes Steuerungssystem 1 aufgebaut werden, um die jeweiligen Steuerungsabläufe für einen mehrachsigen Industrieroboter 2 bzw. für eine entsprechende Automatisierungszelle bewerkstelligen zu können.

Entsprechend einer zweckmäßigen, beispielhaft dargestellten Ausführungsform kann im Steuerungssystem 1 wenigstens eine mobile, insbesondere ein tragbare, Steuervorrichtung 3' implementiert bzw. implementierbar sein. Diese mobile bzw. tragbare Steuervorrichtung 3' kann zumindest einen Teil der Steuerungsaufgaben im Steuerungssystem 1 übernehmen bzw. kann die tragbare Steuervorrichtung 3' bei Bedarf in das Steuerungssystem 1 eingebunden werden, um Steuerungsabläufe des Industrieroboters 2 beeinflussen und/oder beobachten zu können. Eine solche mobile Steuervorrichtung 3' ist üblicherweise in einem mobilen, insbesondere tragbaren Handterminal 4 angeordnet, wie es aus dem Stand der Technik in zahlreichen Ausführungen bekannt ist. Das Steuerungssystem 1 kann also zumindest ein permanent eingebundenes und/oder zumindest ein bedarfsweise einbindbares sowie bei Bedarf aus dem Steuerungssystem 1 entkoppelbares, mobiles Handterminal 4 umfassen.

Dieses mobile Handterminal 4 umfasst eine Mehrzahl von Ein- und Ausgabeelementen, um damit Steuerungsabläufe im Steuerungssystem 1 beobachten und/oder verändern zu können. Diese Ein- und Ausgabeelemente sind in an sich bekannter Weise durch wenigstens ein Display 5, bevorzugt in Art eines Touchscreen, und durch wenigstens ein Bedienelement 6, 6' gebildet. Das wenigstens eine Bedienelement 6, 6' kann dabei durch ein mehrachsiges Bedienelement, insbesondere durch einen Joystick, ein Jog-Rad und/oder durch herkömmliche Schalter und Tastelemente gebildet sein, um Steuerungsabläufe beeinflussen, insbesondere Steuerungsparameter verändern zu können.

Wenigstens ein Bedienelement 6, 6' am mobilen Handterminal 4 ist auch zur softwarebasierten, menügeführten Interaktion mit der Bedienperson vorgesehen, nachdem das mobile Handterminal 4 quasi als Mensch-Maschine-Schnittstelle (HMI) gegenüber dem Industrieroboter 2 fungiert.

Das mobile Handterminal 4 kann in an sich bekannter Weise wenigstens eine Sicherheitsschalteinrichtung 7 umfassen, welche zum bedienerseitigen Beeinflussen bzw. Kontrollieren von potentiell sicherheitskritischen Bewegungen oder Abläufen des Industrieroboters 2 vorgesehen ist. Unter potentiell sicherheitskritischen Bewegungen oder Abläufen sind dabei vor allem Verfahrbewegungen, Zustandsveränderungen oder Prozessaktivierungen zu verstehen, welche eine potentielle Gefährdung für Personen, Einrichtungen oder Gegenstände darstellen könnten. Insbesondere soll mittels der Sicherheitsschalteinrichtung 7 das Gefahrenpotential im Hinblick auf eine Gefährdung von Personen und/oder im Hinblick auf Sachschäden minimiert werden, wobei dieses Gefahrenpotential auch auf den Industrieroboter 2 per se und auf umliegende technische Einrichtungen sowie auf die zu bearbeitenden Prozesse oder Werkstücke zu beziehen ist. Unter dem Begriff Industrieroboter 2 sind dabei auch vergleichbare technische Maschinen oder Maschinenanlagen mit einem bestimmten Automatisierungspotential zu verstehen.

Die Sicherheitsschalteinrichtung 7 im bzw. am mobilen Handterminal 4 kann zumindest einen Zustimmtaster 8 und gegebenenfalls eine Not-Aus-Schaltvorrichtung umfassen, wie dies in Fig. 1 schematisch veranschaulicht wurde. Die Sicherheitstechnik zur fehlersicheren und möglichst zuverlässigen Auswertung der entsprechenden Betätigungszustände ist zumindest teilweise im mobilen Handterminal 4 implementiert. Hierfür ist eine möglichst fehlersichere, insbesondere mehrkreisige Auswertung im Handterminal 4 angeordnet. Bevorzugt ist auch eine sicherheitstechnisch überprüfte Auswertungssoftware für die Sicherheitsschalteinrichtung 7 bzw. für den zumindest einen Zustimmtaster 8 im Handterminal 4 bzw. im Steuerungssystem 1 implementiert.

Mit dem mobilen Handterminal 4 ist dabei eine umfassende Veränderung und/oder Beobachtung von Betriebszuständen oder Abläufen des Industrieroboters 2 ermöglicht. Hierzu wird das Display 5 und wenigstens ein Bedienelement 6, 6' des Handterminals 4 von einer entsprechend befugten Bedienperson eingesetzt. Das mobile, insbesondere tragbare Handterminal 4 wird dabei zweckmäßigerweise von einer Hand der Bedienperson derart gehalten, dass dessen Display 5 bzw. dessen Bedienelemente 6, 6' einsehbar sind.

Das Handterminal 4 kann, wie an sich bekannt, via eine Kabelverbindung und/oder via eine funktechnische Kommunikationsverbindung funktional in das Steuerungssystem 1 eingebunden sein. Hierfür kann auch - wie in Fig. 1 schematisch dargestellt wurde - eine gesonderte Anschlussbox mit einer Steuervorrichtung 3 ` ` vorgesehen sein, welche von einer primären Steuervorrichtung 3 des Industrieroboters 2 abgesetzt angeordnet ist und ein bedarfsweise anbindbares, elektronisches Zusatzmodul im Steuerungssystem 1 darstellen kann.

Bewegungen des Industrieroboters 2 werden, wie an sich bekannt, mit einer Mehrzahl von Bewegungsantrieben 9 umgesetzt, welche via die wenigstens eine Steuervorrichtung 3, 3', 3" gesteuert bzw. geregelt werden. Die Bewegungsantriebe 9 sind beispielshaft durch Motoren, insbesondere durch Servomotoren gebildet, können aber auch durch Linearantriebe, wie zum Beispiel Stellzylinder, oder dergleichen gebildet sein. Die diversen Bewegungsantriebe 9 bilden in Verbindung mit der Mechanik des Industrieroboters 2 sogenannte Bewegungsachsen 10 aus, welche insbesondere durch rotatorische und/oder lineare Bewegungsachsen 10 definiert sein können.

Unter Einbindung von Sensoren bzw. Gebern können kontrollierte Bewegungsabläufe des Industrieroboters 2 bewerkstelligt werden. Typischerweise umfasst ein Industrieroboter 2 den jeweiligen Bewegungsachsen 10 bzw. Bewegungsantrieben 9 zugeordnete Inkremental- und/oder Absolutwert-Positionsgeber. Beispielsgemäß sind zumindest einzelnen der Bewegungsantriebe 9 des Industrieroboters 2 sowohl Inkremental-Positionsgeber 11 als auch Absolutwert-Positionsgeber 12 zugeordnet. Dadurch kann eine umfassende steuerungstechnische Kontrolle der Bewegungsabläufe des Industrieroboters 2 gewährleistet werden. Zumindest einzelne, vorzugsweise alle Inkrementalwert-Positionsgeber 11 des Industrieroboters 2 sind dabei in sicherer Technik ausgeführt. In sicherer Technik umgesetzte Komponenten bzw. Positionsgeber können dabei durch eine zwei- oder mehrkanalige Signalerfassung und/oder Signalauswertung definiert sein und/oder durch technisch diversitäre Ausgestaltungen gekennzeichnet sein. Demgegenüber sind die Absolutwert-Positionsgeber 12 in einer vorteilhaften Ausführungsform in quasi "nicht-sicherer Technik" ausgeführt, also beispielsweise nur einkanalig umgesetzt. Insbesondere sind solche in "nicht-sicherer" Technik ausgeführten Absolutwert-Positionsgeber 12 nicht in der Lage, die erhöhten Zuverlässigkeits- bzw. Sicherheitsstandards eines in sicherer Technik ausgeführten Gebers bzw. Sensors zu erfüllen bzw. zu erreichen. Ein Vorteil von solchen in "nicht-sichererer" Technik ausgeführten Absolutwert-Positionsgebern 12, insbesondere von standardmäßigen Absolutwert-Positionsgebern 12 liegt jedoch darin, dass sie vergleichsweise kostengünstig sind und auch relativ einfach implementierbar sind.

Vor allem jenen Bewegungsachsen 10 bzw. Bewegungsantrieben 9, welche vor einer selbsttätigen Verstellung bzw. vor einer unerwünschten, lastbedingten Bewegung zu schützen sind, ist typischerweise auch wenigstens eine Bremsvorrichtung 13 zugeordnet. In der Regel ist eine solche Bremsvorrichtung 13 sämtlichen steuerungstechnisch aktivier- und deaktivierbaren bzw. steuerbaren Bewegungsantrieben 9 bzw. Bewegungsachsen 10 zugeordnet. Allenfalls ist es aber auch möglich, bei einem Bewegungsantrieb 9 bzw. bei einer Bewegungsachse 10, welche im energielosen Zustand zuverlässig in der Ruhestellung verharrt, eine solche Bremsvorrichtung 13 zu erübrigen. Dies ist beispielsweise für jenen Bewegungsantrieb 9 denkbar, welcher der vertikalen Schwenkachse an der Basis des Industrieroboters 2 zugeordnet ist. Diese Bewegungsachse 10 bzw. diese vertikal verlaufende Schwenkachse des Industrieroboters 2 kann im energielosen Zustand bzw. im stromlosen Ausschaltzustand unter Umständen mit ausreichender Zuverlässigkeit im jeweils eingenommenen Ruhezustand verharren, ohne dass dazu eine zusätzliche Bremsvorrichtung 10 erforderlich wäre.

Durch an sich bekanntes Ansteuern der Bewegungsantriebe 9 in Verbindung mit einer gezielten Ansteuerung der Bremsvorrichtungen 13 und unter Berücksichtigung der von den Positionsgebern 11 und/oder 12 erhaltenen Daten- bzw. Sensorsignale kann sodann eine koordinierte Bewegung des sogenannten Werkzeugmittelpunktes TCP bzw. des Endeffektors 14 des Industrieroboters 2 bewerkstelligt werden.

Die für die Bewegungen des Industrieroboters 2 erforderliche Energie stammt aus wenigstens einem elektrischen Energieversorgungsnetz 15. Mittels diesem Energieversorgungsnetz 15 sind zumindest die Bewegungsantriebe 9 und die wenigstens eine Steuervorrichtung 3, 3" des Industrieroboters 2 betreibbar. Selbstverständlich können auch diverse Energieumwandlungen basierend auf der vom elektrischen Energieversorgungsnetz 15 bezogen elektrischen Energie stattfinden. Beispielsweise können zusätzlich auch pneumatische oder hydraulische Energie-Versorgungssysteme für den planmäßigen Betrieb des Industrieroboters 2 vorgesehen sein.

Typischerweise umfasst wenigstens eine der Steuervorrichtungen 3, 3', 3" eine Positionsdatenspeichervorrichtung 16 in welcher die Positionsdaten der Bewegungsantriebe 9 bzw. Bewegungsachsen 10 und/oder des Werkzeugmittelpunktes TCP zumindest temporär, insbesondere zumindest während der steuerungstechnischen Verarbeitungen bzw. Bahnberechnungen, und/oder permanent hinterlegt sind. Diese Positionsdatenspeichervorrichtung 16 kann somit temporäre und/oder permanente Speicherbausteine, wie zum Beispiel Flash-Speicher und/oder RAM-Speicher und/oder Magnetspeichervorrichtungen umfassen.

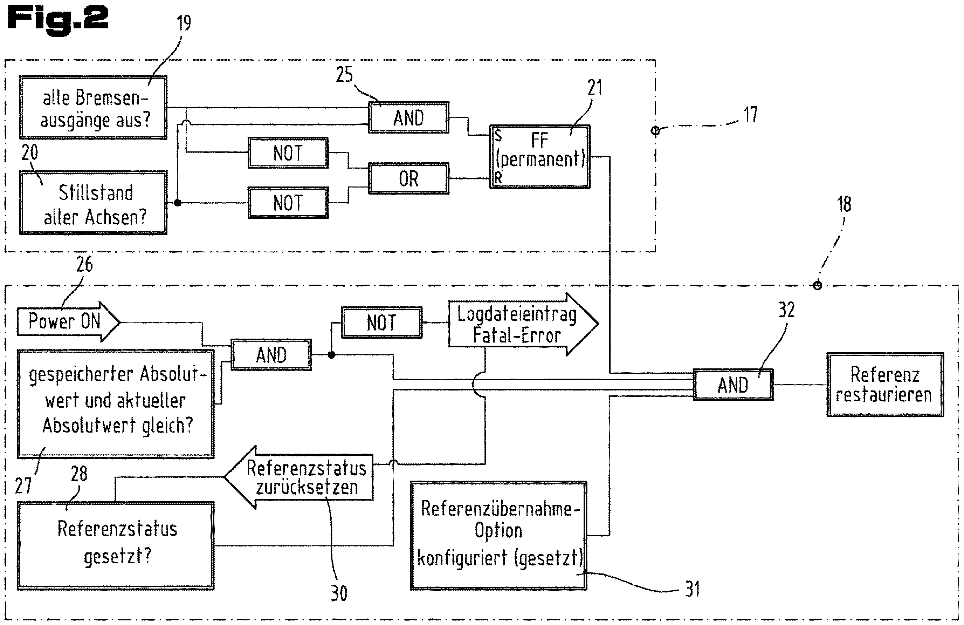

In Fig. 2 ist ein Ablaufschema veranschaulicht, welches einzelne Aspekte eines zweckmäßigen Betriebsverfahrens für den Industrieroboter 2 veranschaulicht. Insbesondere ist dabei die Situation behandelt, welche nach einem plötzlichen bzw. unerwarteten Stromausfall gegenüber dem Industrieroboter 2 bzw. gegenüber dessen Steuervorrichtung 3, 3', 3 ` ` eintreten kann und mit welchem Ablauf eine vorteilhafte Wiederinbetriebnahme des Industrieroboters 2 ermöglicht ist. Die angegebenen technischen Maßnahmen sind aber auch für Situationen anwendbar, in welchen von einer Bedienperson bzw. von einem Dritten eine abrupte Energie- bzw. Stromunterbrechung gegenüber dem Industrieroboter 2 bzw. gegenüber dessen Steuervorrichtung 3, 3', 3" verursacht wurde, also ein geordnetes bzw. plangemäßes Herunterfahren des Gesamtsystems nicht vorgenommen wurde. Die jeweiligen Abläufe gemäß Fig. 2 sind dabei durch wenigstens eine der Steuervorrichtungen 3, 3', 3" umgesetzt bzw. umsetzbar, insbesondere softwaretechnisch darin implementiert.

Der dargestellte Ablaufblock 17 bezieht sich dabei auf den laufenden bzw. regulären Betrieb des Industrieroboters. Demgegenüber behandelt der Ablaufblock 18 Maßnahmen bzw. Steuerungsabläufe in Verbindung mit einem Hochlauf bzw. einer Wiederinbetriebnahme des Industrieroboters 2 nach dem Auftreten eines plötzlichen Strom- bzw. Energieausfalls.

In Bezug auf den Ablaufblock 17 ist eine Abfrageroutine 19 vorgesehen, mit welcher fortlaufend, insbesondere in ausreichend kurzen Zeitabständen ermittelt bzw. evaluiert wird, ob alle steuerungstechnischen Bremsausgänge ausgeschaltet (OFF) sind, das heißt ob alle maßgeblichen Bremsvorrichtungen 13 aktiviert sind. Insbesondere ist in diesem Zusammenhang zu berücksichtigen, dass vor allem die sicherheitsrelevanten Bremsvorrichtungen 13 typischerweise durch sogenannte Federspeicher-Bremssysteme gebildet sind, das heißt im energielosen bzw. unbeaufschlagten Zustand aktiv bzw. eingebremst sind. Demnach sind die Bremsvorrichtungen 13 im Ruhezustand bzw. im nicht angesteuerten Zustand vorzugsweise aktiv. Erst durch eine aktive Strom- bzw. Energiebeaufschlagung können diese gelöst werden, sodass die Bremsvorrichtungen 13 aktiv auszubremsen ist. Die entspricht - wie vorhergehend erwähnt - dem sogenannten Federspeicher-Bremsprinzip bei den sicherheitstechnisch maßgeblichen Bremsvorrichtungen 13 bzw. Bewegungsachsen 10.

Zudem wird gemäß der Abfrageroutine 20 software- bzw. steuerungstechnisch erhoben bzw. überprüft, ob alle Bewegungsantriebe 9 bzw. alle maßgeblichen Bewegungsachsen 10 im Stillstand sind, also jeweils eine Bewegungsgeschwindigkeit mit Wert "Null" vorliegt oder nicht vorliegt. Die Abfrageroutine 20 wird ebenso fortlaufend bzw. in ausreichend kurzen Zeitabständen, beispielsweise im Millisekunden-Takt, ausgeführt.

In diesem Zusammenhang ist festzuhalten, dass der Ausdruck "alle" Bewegungsantriebe 9 bzw. "alle" Bewegungsachsen 10 faktisch nur jene Bewegungsachsen 10 bzw. Bewegungsantriebe 9 umfassen muss, welche für eine sichere Positionsbestimmung bzw. für einen sicheren Betrieb des Industrieroboters 2 maßgeblich sind. Demnach können einzelne, hinsichtlich einer ungewollten Positionsveränderung irrelevante Antriebe bzw. Achsen davon ausgenommen sein. Unter "alle" Bewegungsachsen 10 bzw. Bewegungsantriebe 9 sind somit vor allem jene Abschnitte bzw. Komponenten des Industrieroboters 2 zu verstehen, bei welchen eine selbsttätige Lasthaltung im energie- bzw. ansteuerungslosen Zustand nicht gewährleistet werden kann bzw. nicht vorausgesetzt werden kann.

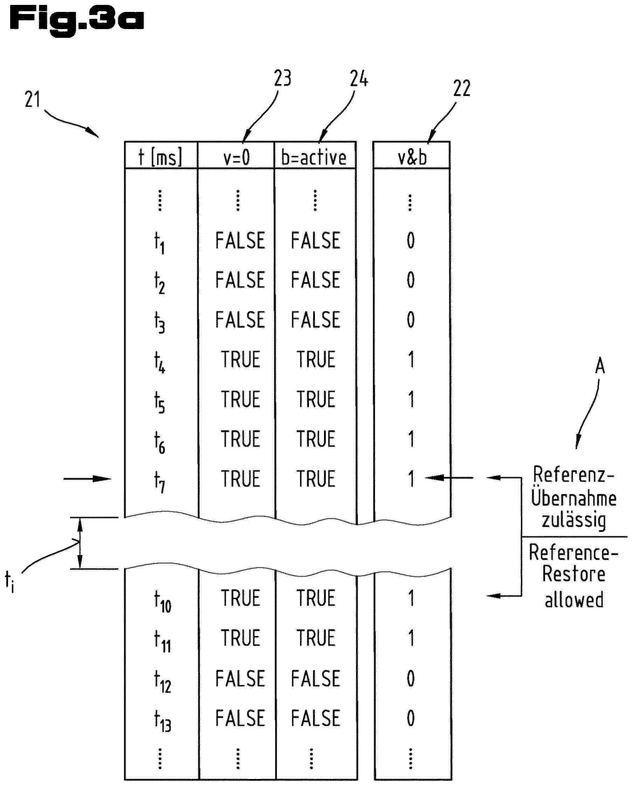

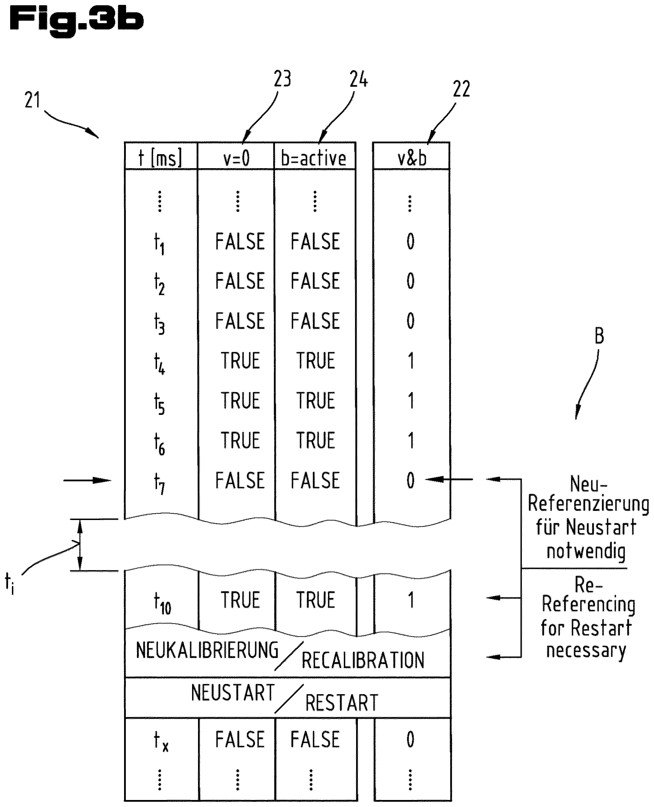

Beispielsgemäß ist dann, wenn via die Abfrageroutine 19 und die Abfrageroutine 20 zu den jeweiligen Zeitpunkten festgestellt wird, dass alle Bremsenausgänge der Steuervorrichtung 3 inaktiv (OFF) sind, das heißt alle Bremsvorrichtungen 13 aktiviert (b = active) bzw. eingefallen sind und zudem alle Bewegungsantriebe 9 bzw. Bewegungsachsen 10 im Stillstand vorliegen (v = 0), so wird in einer nicht-flüchtigen Speichervorrichtung 21 ein positiver Verknüpfungs-Kennwert 22 - siehe Fig. 3a, b - hinterlegt. Insbesondere werden via die Abfrageroutinen 19, 20 Geschwindigkeits-Kennwerte 23 und Bremsen-Kennwerte 24 fortlaufend erhoben und vorzugsweise mittels einer UND-Verknüpfung 25 oder einer anderen Verknüpfungsoperation miteinander verknüpft. Das jeweilige Verknüpfungsergebnis aus der bevorzugt angewandten UND-Verknüpfung 25 wird sodann fortlaufend in der wenigstens einen nicht-flüchtigen Speichervorrichtung 21 hinterlegt. Nur dann, wenn beide Abfrageroutinen 19, 20 ein positives Ermittlungsergebnis liefern, wird via die UND-Verknüpfung 25 - wie an sich bekannt - ein positiver Verknüpfungs-Kennwert 22 in der nicht-flüchtigen Speichervorrichtung 21 stromausfallssicher abgespeichert, wie dies am besten aus einer Zusammenschau der Fig. 2 und 3a, b ersichtlich ist.

Anstelle der Hinterlegung von Verknüpfungs-Kennwerten 22 bzw. auch eines jeweils nur letztgültigen Verknüpfungs-Kennwertes 22, ist es alternativ auch möglich, die Parameter Geschwindigkeits-Kennwert 23 und Bremsen-Kennwert 24 quasi gesondert in einer nicht-flüchtigen Speichervorrichtung 21 fortlaufend zu hinterlegen bzw. jeweils nur einen letztgültigen Wert in der Speichervorrichtung 21 zu hinterlegen. Dieses fortlaufende Hinterlegen bzw. Überschreiben und Aktualisieren bezieht sich dabei auf ein fortlaufendes, stromausfallssicheres Speichern während des üblichen Betriebes des Industrieroboters 2, das heißt während dem Vorhandensein einer gültigen bzw. adäquaten Energieversorgung via das Energieversorgungsnetz 15.

Wie weiters anhand des Ablaufblockes 17 erkennbar ist, wird dann, wenn einer der Parameter gemäß Bremsen-Kennwerte 24 oder Geschwindigkeits-Kennwerte 23 negativ bzw. "false" ist, der Verknüpfungs-Kennwert 22 ebenso negativ bzw. zurückgesetzt. Dieses permanente bzw. fortlaufende Speichern in der nicht-flüchtigen Speichervorrichtung 21 erfolgt in ausreichend kurzen Taktzyklen, insbesondere innerhalb weniger Milli- bzw. Mikrosekunden und fortlaufend während dem Vorhandensein der Energieversorgung gegenüber der Steuervorrichtung 3, 3', 3" und gegenüber dem Industrieroboter 2.

Ein positiver Verknüpfungs-Kennwert 22 respektive ein Stillstand aller Bewegungsachsen 10 und ein Aktivzustand aller Bremsvorrichtungen 13 (Haltebremsen) unmittelbar vor dem Eintritt eines plötzlichen Stromausfalls ist dabei eine Voraussetzung dafür, dass die Steuervorrichtung 3, 3', 3" eine rasche und zugleich sichere Wiederinbetriebnahme des Industrieroboters 2 basierend auf vorhandenen bzw. auslesbaren Positionsdaten und/oder basierend auf den in der Positionsdaten-Speichervorrichtung 16 vorliegenden Positionsdaten ausführen kann. Andernfalls ist eine erneute Referenzierfahrt bzw. eine neuerliche Kalibrierung des Industrieroboters 2 erforderlich bzw. zu empfehlen, wenn der Industrieroboter 2 nach dem Auftreten eines plötzlichen Stromausfalls sicher wieder in Betrieb genommen werden soll.

Wie anhand des Ablaufblockes 18 erkennbar ist, sind ein positiver Verknüpfungs-Kennwert 22 bzw. dementsprechend zugrunde liegende Geschwindigkeits-Kennwerte 23 und Bremsen-Kennwerte 24 eine Voraussetzung dafür, dass eine Wiederinbetriebnahme des Industrieroboters 2 basierend auf zuletzt vorhandenen bzw. abrufbaren Positionsdaten erfolgen kann. Ablaufblock 18 gemäß Fig. 2 bezieht sich dabei auf die Hochlaufphase des Industrieroboters 2 bzw. seiner Steuervorrichtung 3, 3', 3 ` ` nach dem Auftreten und Beheben eines Stromausfalles. Block 26 stellt dabei eine Einschaltanforderung bzw. einen Anlaufbefehl dar. Die Vergleichsoperation 27 betrifft eine Prüfroutine hinsichtlich der in der Positionsdaten-Speichervorrichtung 16 letztgültig bzw. zuletzt gespeicherten Positionswerte und der von der Steuervorrichtung 3, 3', 3" auslesbaren bzw. ausgelesenen Positionswerte anhand der Absolutwert-Positionsgeber 12 der jeweiligen Bewegungsantriebe 9. Nur dann, wenn diese Positionswerte ident sind, kann davon ausgegangen werden, dass während der Stromunterbrechungsphase des Industrieroboters 2 keine unzulässige Positionsveränderung des Industrieroboters 2 bzw. seiner Bewegungsachsen 10 stattgefunden hat, und auch keine allmählichen, lastbedingten Absackungen von Bewegungsachsen 10 aufgetreten sind. Gemäß Block 28 wird evaluiert, ob der Industrieroboter 2 und die Steuervorrichtung 3, 3', 3 ` ` zumindest ursprünglich bzw. initial referenziert wurden. Insbesondere ist darunter ein Merker zu verstehen, welcher angibt, ob eine initiale Referenzierung zwischen Industrieroboter 2 und Steuervorrichtung 3, 3', 3" stattgefunden hat oder nicht.

Block 29 betrifft eine Eintragung in eine Log-Datei der Steuervorrichtung 3, 3', 3 ` ` für den Fall, dass im Zuge eines Hochlaufes nach einer Stromunterbrechnung eine Abweichung zwischen den gespeicherten Absolutwerten aus der Positionsdaten-Speichervorrichtung 16 und den von den Absolutwert-Positionswertgebern 12 ausgelesenen Positionsdaten gegeben ist. In diesem Fall ist nämlich von einer unzulässigen bzw. bewusst herbeigeführten Veränderung der Positionen des Industrieroboters 2 während der Phase des Stromausfalls auszugehen. Gemäß einem Aktionsblock 30 kann daraufhin eine Rücksetzung des Referenzierungsstatus des Industrieroboters 2 im Block 28 eingeleitet bzw. vorgenommen werden.

Der Statusblock 31 definiert ein Funktionsmodul der Steuervorrichtung 3, 3', 3". Insbesondere definiert der Statusblock 31 ein von einer Bedienperson wahlweise aktivier- und deaktivierbares Funktionsmodul, welches Funktionsmodul zur wahlweisen Freischaltung und Sperrung einer zumindest teil- oder vollautomatischen Wiederinbetriebnahme des Industrieroboters 2 ohne dem Erfordernis zur Ausführung eines erneuten Referenzierungsvorganges. Wie weiters aus Fig. 2 ersichtlich ist, kann der Industrieroboter 2 rasch und zugleich betriebssicher wieder in Betrieb genommen werden, wenn alle Abfragekriterien gemäß dem Ausführungsbeispiel in Fig. 2 den Status "true" aufweisen. Insbesondere ist eine Summen-Verknüpfung 32 bzw. eine kumulierende Evaluierung vorgesehen, welche nur dann, wenn alle relevanten Abfrageparameter positiv sind, eine umgehende Wiederinbetriebnahme des Industrieroboters 2 ohne dem Erfordernis einer Kalibrierungsfahrt erlaubt, insbesondere ohne Ausführung eines relativ zeitaufwändigen Referenzierungs- oder Rekalibrierungsvorganges ermöglicht.

In den Fig. 3a, b sind beispielhafte Auszüge aus der fortlaufend bzw. in kurzen Zeitintervallen beschriebenen bzw. aktuell gehaltenen, nicht-flüchtigen Speichervorrichtung 21 veranschaulicht. Abweichend von der Darstellung mit einer Vielzahl von einzelnen Speicherplätzen ist es selbstverständlich auch möglich, nur jeweils einen einzelnen Speicherplatz vorzusehen und diesen fortlaufend zu überschreiben bzw. zu aktualisieren. Insbesondere ist es auch ausreichend, jeweils nur einen einzigen Kennwert der jeweiligen Parameter fortlaufend darin zu erfassen bzw. fortlaufend zu speichern. Die Speichervorrichtung 21 kann dabei jeweils unverknüpfte Geschwindigkeits-Kennwerte 23 und Bremsen-Kennwerte 24 abspeichern, oder alternativ zur Speicherung von vorzugsweise UND-verknüpften Verknüpfungs-Kennwerten 22 vorgesehen sein.

Gemäß dem Speicherinhalt nach Fig. 3a weist zum Zeitpunkt t₇ die Geschwindigkeit aller Bewegungsachsen 10 den Wert 0 auf, das heißt alle Achsen liegen im Stillstand vor. Zudem sind alle Bremsvorrichtungen 13 aktiv, was durch den Wert "true" repräsentiert ist. Dementsprechend ist zum Zeitpunkt t₇ ein gesicherter bzw. zuverlässiger Stillstand des Industrieroboters 2 gegeben. Unmittelbar nachfolgend, insbesondere zum Zeitpunkt tᵢ tritt eine plötzliche bzw. unerwartete Stromunterbrechung auf und der Industrieroboter 2 bzw. dessen Steuervorrichtung ist ohne Versorgungs- bzw. Betriebsenergie. Zum beispielhaften Zeitpunkt t₁₀ ist eine Wiederinbetriebnahme des Industrieroboters vorgesehen. Der letztgültige in der nicht-flüchtigen Speichervorrichtung 21 hinterlegte Verknüpfungs-Kennwert 22 vor dem Auftreten der Stromunterbrechung tᵢ ist positiv (1), wodurch eine Wiederinbetriebnahme des Industrieroboters zum Zeitpunkt t₁₀ ohne Durchführung einer neuerlichen Kalibrierung bzw. Referenzierfahrt zugelassen ist bzw. vorgenommen wird. Insbesondere kann dadurch mit hoher Zuverlässigkeit und besonders kostenoptimiert eruiert werden, dass der Industrieroboter 2 vor der Stromunterbrechung zum Zeitpunkt tᵢ zuverlässig im Stillstand war, also ein gesicherter Ruhezustand vorgelegen hatte. In Folge kann eine erneute Referenzierung bzw. eine neue Referenzierungsfahrt erübrigt werden. Dies bringt die Vorteile von erhöhter Zeiteinsparung mit sich bzw. können dadurch Zeitverluste in Zusammenhang mit plötzlichen Stromunterbrechungen reduziert werden, ohne dass Sicherheitseinbußen in Verbindung mit der Wiederinbetriebnahme des Industrieroboters 2 auftreten. Fig. 3a veranschaulicht dabei ein Beispiel für ein erstes Ablaufszenario bzw. für eine erste Ablaufvariante A.

Demgegenüber veranschaulicht Fig. 3b eine zweite Option bzw. eine zweite Ablaufmöglichkeit B im Betriebs- bzw. Steuerverfahren des Industrieroboters 2. Insbesondere ist dabei zum Zeitpunkt t₇ der Industrieroboter offensichtlich in Bewegung, nachdem die Geschwindigkeit zumindest einer Bewegungsachse 10 ungleich 0 war und der Zustand zumindest einer Bremsvorrichtung 13 inaktiv war. Dies ist beispielhaft veranschaulicht durch den Verknüpfungs-Kennwert 22 mit dem Wert 0 zum Zeitpunkt t₇. Unmittelbar anschließend, insbesondere zum Zeitpunkt tᵢ tritt eine unerwartete Stromunterbrechung auf. Zum beispielhaften Zeitpunkt t₁₀ ist die Energieversorgung wieder hergestellt und wird sodann von der Steuervorrichtung evaluiert, welcher Wert letztgültig bzw. zuletzt in der nicht-flüchtigen Speichervorrichtung 21 hinterlegt wurde bzw. noch hinterlegt werden konnte. Nachdem hierbei ein negativer Verknüpfungs-Kennwert 22 - repräsentiert durch den Wert 0 - vorliegt, ist vorgesehen, eine Wiederinbetriebnahme des Industrieroboters 3 nur mit einer bzw. erst nach Durchführung einer erneuten Referenzierfahrt zuzulassen. Insbesondere ist in diesem Fall davon auszugehen, dass der Industrieroboter 2 in Bewegung war oder zumindest nicht zuverlässig im Stillstand war, als die plötzliche Stromunterbrechung eingetreten ist. Beispielsgemäß ist erst zu einem Zeitpunkt tₓ eine Wiederinbetriebnahme bzw. ein vollautomatischer oder programmgesteuerter Betrieb des Industrieroboters 2 wieder möglich. Das Vorgehen gemäß dem zweiten Ablauf B erfordert also eine Rekalibrierung des Industrieroboters 2 und ist in diesem Fall erst dann ein hochsicherer, exakt referenzierter Betrieb des Industrieroboters 2 wieder gewährleistet.

Durch die vorstehend angegebenen Maßnahmen kann sichergestellt werden, dass eine Stromausfall während einer laufenden Bewegung des Industrieroboters 2 sicher erkannt wird und in diesem Fall eine automatische Weiterführung bzw. Übernahme des zuletzt vorgelegenen Referenzierungsstatus des Industrieroboters 2 nach dem Wiedereinschalten des Industrieroboters 2 als ungültig deklariert wird.

Wie vorstehend beschrieben, wird im laufenden Betrieb ständig überwacht, ob eine Bewegung der Positionsgeber 11 und/oder 12 bzw. der Bewegungsachsen 10 stattfindet. Diese Bewegungserkennung ist dabei technisch sicher aufgrund der in sicherer Technik ausgeführten Inkrementalwert-Positionsgeber 11. Zudem wird überwacht, ob die vorzugsweise sicheren Bremsenausgänge der Steuervorrichtung 3 ein- oder ausgeschaltet sind, insbesondere ob die Bremsvorrichtungen 13 aktiviert oder deaktiviert sind. Die Bremsenausgänge der Steuervorrichtung 3 können bevorzugt in sicherer Technik ausgeführt bzw. sicher überwacht werden. Die jeweiligen Zustände bzw. Verknüpfungszustände werden fortlaufend in einen vorzugsweise abgesicherten Permanentspeicher, insbesondere in die nicht-flüchtige Speichervorrichtung 21 geschrieben. Beispielsweise kann dies ein FRAM-Speicher sein. Wenn alle Bremsenausgänge derart gesetzt sind, dass alle relevanten Bremsvorrichtungen 13 aktiv sind und außerdem die Geschwindigkeiten aller relevanten Bewegungsachsen 10 bzw. Bewegungsantriebe 9 den Wert 0 aufweisen, also der Industrieroboter 2 mit hoher Sicherheit steht und gebremst ist, so wird die nicht-flüchtige Speichervorrichtung 21 bzw. ein darin geführter Merker bzw. Verknüpfungs-Kennwert 22 auf "true" (1) gesetzt. Wenn eine Geschwindigkeit registriert wird, oder eine Bremse gelöst ist, so wird der Speicher bzw. der darin geführte Merker bzw. Verknüpfungs-Kennwert 22 auf "false" (0) gesetzt. Nach dem Hochlauf der Steuervorrichtung 3, 3', 3" wird die Speichervorrichtung 21 ausgelesen. Nur wenn der letztgültige Merker bzw. Verknüpfungs-Kennwert 22 auf "true" (1) gesetzt war, wird ein vormals vorhandener bzw. erfüllt gewesener Referenzierungsstatus des Industrieroboters 2 wiederhergestellt bzw. übernommen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Steuerungssystem | 29 | Block |
| 2 | Industrieroboter | 30 | Aktionsblock |
| 3, 3', 3" | Steuervorrichtung | 31 | Statusblock |
| 4 | Handterminal | 32 | Summen-Verknüpfung |
| 5 | Display | | |
| 6, 6' | Bedienelement | tᵢ | Stromunterbrechung |
| 7 | Sicherheitsschalteinrichtung | TCP | Werkzeugmittelpunkt |
| 8 | Zustimmtaster | A | erster Ablauf |
| 9 | Bewegungsantriebe | B | zweiter Ablauf |
| 10 | Bewegungsachsen | | |
| 11 | Inkrementalwert-Positionsgeber | | |
| 12 | Absolutwert-Positionsgeber | | |
| 13 | Bremsvorrichtungen | | |
| 14 | Endeffektor | | |
| 15 | Energieversorgungsnetz | | |
| 16 | Positionsdaten-Speicher- | | |
| | vorrichtung | | |
| 17 | Ablaufblock | | |
| 18 | Ablaufblock | | |
| 19 | Abfrageroutine | | |
| 20 | Abfrageroutine | | |
| 21 | nicht-flüchtige Speicher- | | |
| | vorrichtung | | |
| 22 | Verknüpfungs-Kennwerte | | |
| 23 | Geschwindigkeits-Kennwerte | | |
| 24 | Bremsen-Kennwerte | | |
| 25 | UND-Verknüpfung | | |
| 26 | Block | | |
| 27 | Vergleichsoperation | | |
| 28 | Block | | |

## Patentansprüche

1. Verfahren zum Betreiben eines Industrieroboters (2) mittels zumindest einer elektronischen Steuervorrichtung (3, 3', 3"), wobei das Verfahren folgende Verfahrensschritte umfasst:
- Ausführen von Bewegungen des Industrieroboters (2) mittels mehrerer Bewegungsantriebe (9) des Industrieroboters, welche Bewegungsantriebe (9) von der Steuervorrichtung (3, 3', 3") angesteuert werden;
- fortlaufendes Speichern von Positionsdaten eines Werkzeugmittelpunktes (TCP) des Industrieroboters in einer Positionsdatenspeichervorrichtung (16);
**gekennzeichnet durch**
- fortlaufendes Erfassen und Verarbeiten von Geschwindigkeitszuständen von allen Bewegungsantrieben (9) des Industrieroboters;
- fortlaufendes Erfassen und Verarbeiten von Brems-Zuständen von Bremsvorrichtungen (13) für sämtliche Bewegungsantriebe (9) des Industrieroboters, wobei die jeweiligen Geschwindigkeitszustände von allen Bewegungsantrieben (9) als Geschwindigkeits-Kennwerte (23) fortlaufend in wenigstens einer nicht-flüchtigen Speichervorrichtung (21) gespeichert werden,
und zudem die jeweiligen Brems-Zustände der Bremsvorrichtungen (13) an allen Bewegungsantrieben (9) als Bremsen-Kennwerte (24) fortlaufend in der wenigstens einen nicht-flüchtigen Speichervorrichtung (21) gespeichert werden,
und wobei im Zuge einer auszuführenden Wiederinbetriebnahme des Industrieroboters (2) nach einer Stromunterbrechung (tᵢ) gegenüber dem Industrieroboter (2) von der Steuervorrichtung (3, 3', 3") zumindest der zuletzt gespeicherte Geschwindigkeits-Kennwert (23) und auch Bremsen-Kennwert (24) der Bewegungsantriebe (9) des Industrieroboters (2) aus der wenigstens einen nicht-flüchtigen Speichervorrichtung (21) ausgelesen wird,
wobei weiters im Zuge der auszuführenden Wiederinbetriebnahme von der Steuervorrichtung (3, 3', 3 ` `) der zumindest eine ausgelesene Geschwindigkeits-Kennwert (23) und Bremsen-Kennwert (24) der Bewegungsantriebe (9) des Industrieroboters (2) evaluiert werden, und wenn zum Zeitpunkt der Stromunterbrechung (tᵢ) die Geschwindigkeit aller Bewegungsantriebe (9) Null war und der Brems-Zustand aller Bremsvorrichtungen (13) auf aktiv gesetzt war, die Wiederinbetriebnahme des Industrieroboters (2) dann auf jenen Positionsdaten beruht, welche (a) zum Zeitpunkt der Wiederinbetriebnahme des Industrieroboters (2) von der Steuervorrichtung (3, 3', 3") von Absolutwert-Positionsgebern (12) an den Bewegungsantrieben (9) auslesbar sind, oder (b) aus der Positionsdatenspeichervorrichtung (16) der Steuervorrichtung (3, 3 `, 3 ` `) abrufbar sind,
und andernfalls die Wiederinbetriebnahme des Industrieroboters (2) auf Positionsdaten beruht, welche erst nach einer Durchführung eines Referenzierungs- oder Rekalibriervorganges des Werkzeugmittelpunktes (TCP) des Industrieroboters (2) erzeugt werden.

2. Verfahren nach Anspruch 1, **dadurch gekennzeichnet, dass**
- die fortlaufend erfassten Geschwindigkeitszustände und die fortlaufend erfassten Brems-Zustände fortlaufend miteinander UND-verknüpft (25) werden, und dass die jeweiligen Verknüpfungsergebnisse dieser fortlaufenden Verknüpfungen als Verknüpfungs-Kennwerte (22) fortlaufend in der wenigstens einen nicht-flüchtigen Speichervorrichtung (21) hinterlegt werden, wobei
- ein positiver Verknüpfungs-Kennwert (22) in der nicht-flüchtigen Speichervorrichtung (21) hinterlegt wird, wenn zum Zeitpunkt der Verknüpfungen bei allen Bewegungsantrieben (9) der Stillstandszustand erfüllt ist und bei allen Bremsvorrichtungen (13) der Brems-Zustand als aktiv gesetzt ist, andernfalls ein negativer Verknüpfungs-Kennwert (22) in der wenigstens einen nicht-flüchtigen Speichervorrichtung (21) hinterlegt wird.

3. Verfahren nach Anspruch 2, **dadurch gekennzeichnet, dass** eine Wiederinbetriebnahme des Industrieroboters (2) ohne neuer Referenzierung des Industrieroboters (2) eingeleitet wird, wenn in der wenigstens einen nicht-flüchtigen Speichervorrichtung (21) ein positiver Verknüpfungs-Kennwert (22) vorliegt.

4. Verfahren nach Anspruch 2, **dadurch gekennzeichnet, dass** im Zuge einer Wiederinbetriebnahme des Industrieroboters (2) nach einer Stromunterbrechung die wenigstens eine nicht-flüchtige Speichervorrichtung (21) ausgelesen wird, und dass eine Wiederinbetriebnahme des Industrieroboters (2) die Durchführung eines Referenzierungsablaufes zur Ermittlung neu kalibrierter Positionsdaten erfordert, wenn in der wenigstens einen nicht-flüchtigen Speichervorrichtung (21) ein negativer Verknüpfungs-Kennwert (22) vorliegt.

5. Verfahren nach einem der vorhergehenden Ansprüche, **dadurch gekennzeichnet, dass** die jeweiligen Geschwindigkeitszustände der Bewegungsantriebe (9) von der Steuervorrichtung (3, 3', 3 ` `) mittels in sicherer Technik ausgeführter Inkrementalwert-Positionsgeber (11) an den Bewegungsantrieben (9) oder Bewegungsachsen (10) erfasst werden.

6. Verfahren nach einem der vorhergehenden Ansprüche, **dadurch gekennzeichnet, dass** die jeweiligen Brems-Zustände der Bremsvorrichtungen (13) an den Bewegungsantrieben (9) von der Steuervorrichtung (3, 3', 3") mittels sicherer Technik erfasst werden.

7. Verfahren nach einem der vorhergehenden Ansprüche, **dadurch gekennzeichnet, dass** zumindest einzelnen der Bewegungsantriebe (9) des Industrieroboters (2) Absolutwert-Positionsgeber (12) zugeordnet sind, welche in nicht-sicherer Technik ausgeführt sind.

8. Verfahren nach einem der vorhergehenden Ansprüche, **dadurch gekennzeichnet, dass** Positionswerte von in nicht-sicherer Technik ausgeführten Absolutwert-Positionsgebern (12) an den Bewegungsantrieben (9) des Industrieroboters (2) von der Steuervorrichtung (3, 3', 3") fortlaufend gespeichert werden, und dass im Zuge einer Wiederinbetriebnahme des Industrieroboters von der Steuervorrichtung (3, 3', 3") überprüft wird, ob zuletzt abgespeicherte Positionswerte der diversen Bewegungsantriebe (9) mit den von den Absolutwert-Positionsgebern (12) aktuell ausgelesenen Positionswerten der diversen Bewegungsantriebe (9) übereinstimmen oder nicht übereinstimmen.

9. Verfahren nach einem der vorhergehenden Ansprüche, **dadurch gekennzeichnet, dass** von der Steuervorrichtung (3, 3', 3") ein datentechnischer Referenzierungsstatus des Industrieroboters (2) geführt wird, wobei der Referenzierungsstatus als "erfüllt" geführt wird, wenn die Ist-Position des Werkzeugmittelpunktes (TCP) des Industrieroboters mit den der Steuervorrichtung (3, 3', 3 ` `) zugrunde liegenden Positionsdaten des Werkzeugmittelpunktes (TCP) des Industrieroboters übereinstimmt, und dass der Referenzierungsstatus von der Steuervorrichtung (3, 3', 3") als "nicht erfüllt" geführt wird, wenn die genannte Ist-Position und die genannten Positionsdaten voneinander abweichen.

10. Verfahren nach einem der vorhergehenden Ansprüche, **dadurch gekennzeichnet, dass** durch eine organisatorische Betriebsanweisung manuell initiierte Positionsveränderungen des Werkzeugmittelpunktes (TCP) des Industrieroboters (2) untersagt werden, wenn in Verbindung mit einer auszuführenden Wiederinbetriebnahme des Industrieroboters ein manueller Referenzierungsvorgang mit dem Industrieroboter erübrigt werden soll.

11. Verfahren nach einem der vorhergehenden Ansprüche, **dadurch gekennzeichnet, dass** von der Steuervorrichtung (3, 3', 3") eine Wiederinbetriebnahme des Industrieroboters (2) ohne Ausführung eines manuellen Referenzierungsvorganges eingeleitet oder umgesetzt wird, wenn die gespeicherten Positionswerte und die zum Zeitpunkt der vorgesehenen Wiederinbetriebnahme des Industrieroboters von den Absolutwert-Positionsgebern (12) ausgelesenen Positionswerte gleich sind.

12. Verfahren nach einem der vorhergehenden Ansprüche, **dadurch gekennzeichnet, dass** von der Steuervorrichtung (3, 3', 3") eine Wiederinbetriebnahme des Industrieroboters (2) erst nach einer Ausführung eines manuellen Referenzierungsvorganges eingeleitet oder umgesetzt wird, wenn die gespeicherten Positionswerte im Vergleich zu den von den Absolutwert-Positionsgebern (12) zum Zeitpunkt der vorgesehenen Wiederinbetriebnahme des Industrieroboters ausgelesenen Positionswerten ungleich sind.

13. Verfahren nach einem der vorhergehenden Ansprüche, **dadurch gekennzeichnet, dass** von der Steuervorrichtung (3, 3', 3") eine Fehlereintragung in eine Logdatei vorgenommen wird, wenn die gespeicherten Positionswerte im Vergleich zu den von den Absolutwert-Positionsgebern (12) zum Zeitpunkt der vorgesehenen Wiederinbetriebnahme des Industrieroboters ausgelesenen Positionswerten ungleich sind.

14. Verfahren nach einem der vorhergehenden Ansprüche, **dadurch gekennzeichnet, dass** von der Steuervorrichtung (3, 3', 3") eine Rücksetzung oder Löschung des Referenzierungsstatus des Industrieroboters (2) vorgenommen wird, wenn die von der Steuervorrichtung (3, 3', 3") gespeicherten Positionswerte im Vergleich zu den von den Absolutwert-Positionsgebern (12) zum Zeitpunkt der vorgesehenen Wiederinbetriebnahme des Industrieroboters ausgelesenen Positionswerten ungleich sind.

15. Verfahren nach einem der vorhergehenden Ansprüche, **dadurch gekennzeichnet, dass** von der Steuervorrichtung (3, 3', 3") ein von einer Bedienperson wahlweise aktivier- und deaktivierbares Funktionsmodul ausgeführt wird, welches Funktionsmodul zur wahlweisen Freischaltung und Sperrung einer zumindest teil- oder vollautomatischen Wiederinbetriebnahme des Industrieroboters (2) ohne einem Erfordernis zur Ausführung eines erneuten Referenzierungsvorganges eingerichtet ist.

16. Industrieroboter umfassend eine Steuervorrichtung (3, 3', 3") zum Betreiben des Industrieroboters (2), **dadurch gekennzeichnet, dass** er zur Ausführung eines Verfahrens nach einem oder mehreren der vorhergehenden Ansprüche eingerichtet ist.

## Claims

1. A method for operating an industrial robot (2) by means of at least one electronic control device (3, 3', 3"), wherein the method comprises the following steps:
- executing movements of the industrial robot (2) by means of a plurality of motion drives (9) of the industrial robot, which motion drives (9) are controlled by the control device (3, 3', 3 ");
- continuously storing position data of a tool center point (TCP) of the industrial robot in a position data storage device (16);
**characterized by**
- continuously detecting and processing speed conditions of all motion drives (9) of the industrial robot;
- continuously detecting and processing braking conditions of braking devices (13) for all motion drives (9) of the industrial robot, wherein the respective speed conditions of all motion drives (9) are continuously stored as speed characteristic values (23) in at least one non-volatile memory device (21), and in addition the respective braking states of the braking devices (13) on all motion drives (9) are continuously stored as braking characteristic values (24) in the at least one non-volatile memory device (21),
and wherein, in the course of a restart of the industrial robot (2) to be carried out after a power interruption (tᵢ) with respect to the industrial robot (2), at least the last stored speed characteristic value (23) and also the braking characteristic value (24) of the motion drives (9) of the industrial robot (2) are read out of the at least one non-volatile memory device (21) by the control device (3, 3', 3"),
wherein, furthermore, in the course of the restart to be carried out, the control device (3, 3', 3") evaluates the at least one read-out speed characteristic value (23) and brake characteristic value (24) of the motion drives (9) of the industrial robot (2), and if, at the point in time of the power interruption (tᵢ) the speed of all motion drives (9) was zero and the braking state of all braking devices (13) was set to active, the restart of the industrial robot (2) is then based on the position data which (a) at the point in time of the restart of the industrial robot (2) can be read from absolute value position transmitters (12) on the motion drives (9) by the control device (3, 3', 3"), or (b) can be called up from the position data storage device (16) of the control device (3, 3', 3'"),
and otherwise the restart of the industrial robot (2) is based on position data which is only generated after a homing or recalibration process of the tool center point (TCP) of the industrial robot (2) has been carried out.

2. A method according to claim 1, **characterized in that**
- the continuously detected speed states and the continuously detected braking states are continuously AND-linked (25) with one another, and **in that** the respective linking results of these continuous links are continuously stored as linking characteristic values (22) in the at least one non-volatile memory device (21), wherein
- a positive linking characteristic value (22) is stored in the non-volatile memory device (21) if, at the point in time of linking, the standstill state is fulfilled for all motion drives (9) and the braking state is set as active for all braking devices (13), otherwise a negative linking characteristic value (22) is stored in the at least one non-volatile memory device (21).

3. The method according to claim 2, **characterized in that** a restart of the industrial robot (2) without new referencing of the industrial robot (2) is initiated if a positive linking characteristic value (22) is present in the at least one non-volatile memory device (21).

4. The method according to claim 2, **characterized in that**, in the course of restarting the industrial robot (2) after a power interruption, the at least one non-volatile memory device (21) is read out, and that restarting the industrial robot (2) requires the execution of a referencing sequence for determining recalibrated position data if a negative linkage characteristic value (22) is present in the at least one non-volatile memory device (21).

5. The method according to one of the preceding claims, **characterized in that** the respective speed states of the motion drives (9) are detected by the control device (3, 3 `, 3") by means of incremental value position transmitters (11) implemented in secure technology at the motion drives (9) or motion axes (10).

6. The method according to any of the preceding claims, **characterized in that** the respective braking conditions of the braking devices (13) on the motion drives (9) are detected by the control device (3, 3', 3") by means of secure technology.

7. The method according to one of the preceding claims, **characterized in that** at least individual ones of the motion drives (9) of the industrial robot (2) are assigned absolute value position transmitters (12) which are implemented in non-safe technology.

8. The method according to one of the preceding claims, **characterized in that** position values of absolute value position transmitters (12) implemented in non-safe technology are continuously stored at the motion drives (9) of the industrial robot (2) by the control device (3, 3', 3"), and that, in the course of restarting the industrial robot, the control device (3, 3', 3") checks whether or not the last stored position values of the various motion drives (9) match the position values of the various motion drives (9) currently read from the absolute value position transmitters (12).

9. The method according to one of the preceding claims, **characterized in that** a data-related referencing status of the industrial robot (2) is managed by the control device (3, 3', 3"), wherein the referencing status is managed as "fulfilled" if the actual position of the tool center point (TCP) of the industrial robot coincides with the position data of the tool center point (TCP) of the industrial robot on which the control device (3, 3', 3") is based, and that the referencing status is managed by the control device (3, 3', 3") as "not fulfilled" if said actual position and said position data differ from one another.

10. The method according to one of the preceding claims, **characterized in that** organizational operating instructions are used to prohibit manually initiated changes in the position of the tool center point (TCP) of the industrial robot (2) if a manual referencing operation with the industrial robot is to be dispensed with in connection with a restart of the industrial robot that is to be carried out.

11. The method according to one of the preceding claims, **characterized in that** the control device (3, 3 `, 3 ` `) initiates or implements a restart of the industrial robot (2) without performing a manual referencing operation if the stored position values and the position values read from the absolute value position transmitters (12) at the point in time of the intended restart of the industrial robot are the same.

12. The method according to one of the preceding claims, **characterized in that** a restart of the industrial robot (2) is initiated or implemented by the control device (3, 3', 3") only after a manual referencing operation has been carried out if the stored position values are not equal to the position values read from the absolute value position transmitters (12) at the point in time of the intended restart of the industrial robot.

13. The method according to one of the preceding claims, **characterized in that** the control device (3, 3 `, 3 ` `) makes an error entry in a log file if the stored position values are not equal to the position values read from the absolute value position transmitters (12) at the point in time of the intended restart of the industrial robot.

14. The method according to any of the preceding claims, **characterized in that** a resetting or erasing of the referencing status of the industrial robot (2) is performed by the control device (3, 3', 3") if the position values stored by the control device (3, 3', 3") are not equal to the position values read from the absolute value position transmitters (12) at the point in time of the intended restart of the industrial robot.

15. The method according to one of the preceding claims, **characterized in that** the control device (3, 3', 3") executes a function module that can be optionally activated and deactivated by an operator, which function module is configured for optionally enabling and blocking an at least partially or fully automatic restart of the industrial robot (2) without the need to perform a new referencing operation.

16. An industrial robot comprising a control device (3, 3', 3") for operating the industrial robot (2), **characterized in that** it is configured to perform a method according to one or more of the preceding claims.

## Revendications

1. Procédé de fonctionnement d'un robot industriel (2) au moyen d'au moins un dispositif de commande électronique (3, 3', 3"), dans lequel le procédé comprend les étapes suivantes :
- exécution de mouvements du robot industriel (2) au moyen de plusieurs entraînements de mouvement (9) du robot industriel, ces entraînements de mouvement (9) étant contrôlés par le dispositif de commande (3, 3', 3") ;
- enregistrement en continu des données de position d'un centre d'outil (TCP) du robot industriel dans un dispositif d'enregistrement de données de position (16) ;
**caractérisé par**
- la mesure et le traitement en continu des états de vitesse de tous les entraînements de mouvement (9) du robot industriel ;
- la mesure et le traitement en continu des états de freinage de dispositifs de freinage (13) pour tous les entraînements de mouvement (9) du robot industriel, dans lequel les états de vitesse respectifs de tous les entraînements de mouvement (9) sont enregistrés en continu dans au moins un dispositif d'enregistrement non volatil (21) en tant que valeurs caractéristiques de vitesse (23) et, en outre, les états de freinage respectifs des dispositifs de freinage (13) sur tous les entraînements de mouvement (9) sont enregistrés en continu dans l'au moins un dispositif d'enregistrement non volatil (21) en tant que valeurs caractéristiques de freinage (24),
et dans lequel, au cours d'une remise en service du robot industriel (2), à exécuter après une coupure de courant (tᵢ) vis-à-vis du robot industriel (2) par le dispositif de commande (3, 3', 3"), au moins la dernière valeur caractéristique de vitesse (23) enregistrée en dernier ainsi que la valeur caractéristique de freinage (24) des entraînements de mouvement (9) du robot industriel (2) sont lues dans l'au moins un dispositif d'enregistrement non volatil (21),
dans lequel, en outre, au cours d'une remise en service du robot industriel (2), à exécuter par le dispositif de commande (3, 3', 3"), l'au moins une valeur caractéristique de vitesse (23) et valeur caractéristique de freinage (24) lue des entraînements de mouvement (9) du robot industriel (2) sont évaluées et, lorsque, au moment de la coupure de courant (tᵢ), la vitesse de tous les entraînements de mouvement (9) était nulle et l'état de freinage de tous les dispositifs de freinage (13) était actif, la remise en service du robot industriel (2) repose alors sur les données de position qui (a) peuvent être lues, au moment de la remise en service du robot industriel (2), par le dispositif de commande (3, 3', 3") dans des capteurs de position à valeur absolue (12) sur les entraînements de mouvement (9) ou (b) peuvent être appelées dans le dispositif d'enregistrement de données de position (16) du dispositif de commande (3, 3', 3"), et, dans le cas contraire, la remise en service du robot industriel (2) repose sur les données de position qui ne sont générées qu'après une exécution d'un processus de référencement ou de recalibrage du centre d'outil (TCP) du robot industriel (2).

2. Procédé selon la revendication 1, **caractérisé en ce que**
- les états de vitesse mesurés en continu et les états de freinage mesurés en continu sont combinés entre eux avec une opération AND (25) et les résultats de combinaison respectifs de ces combinaisons en continu sont enregistrés en continu dans l'au moins un dispositif d'enregistrement non volatil (21) en tant que valeurs caractéristiques de combinaisons (22),
dans lequel
- une valeur caractéristique de combinaison positive (22) est enregistrée dans le dispositif d'enregistrement non volatil (21) lorsque, au moment des combinaisons, pour tous les entraînements de mouvement (9), l'état d'immobilisation est respecté et, pour tous les dispositifs de freinage (13), l'état de freinage est actif, sinon une valeur caractéristique de combinaison négative (22) est enregistrée dans l'au moins un dispositif d'enregistrement non volatil (21).

3. Procédé selon la revendication 2, **caractérisé en ce qu'**une remise en service du robot industriel (2) est initiée sans nouveau référencement du robot industriel (2) lorsque, dans l'au moins un dispositif d'enregistrement non volatil (21), il existe une valeur caractéristique de combinaison positive (22).

4. Procédé selon la revendication 2, **caractérisé en ce que**, au cours d'une remise en service du robot industriel (2) après une coupure de courant, l'au moins un dispositif d'enregistrement non volatil (21) est lu et une remise en marche du robot industriel (2) nécessite un processus de référencement pour la détermination de données de position recalibrées lorsque, dans l'au moins un dispositif d'enregistrement non volatil (21), il existe une valeur caractéristique de combinaison négative (22).

5. Procédé selon l'une des revendications précédentes, **caractérisé en ce que** les états de vitesse respectifs des entraînements de mouvement (9) sont mesurés par le dispositif de commande (3, 3', 3") au moyen de capteurs de position à valeurs incrémentales (11), réalisés à l'aide d'une technologie fiable sur les entraînements de mouvement (9) ou les axes de mouvement (10).

6. Procédé selon l'une des revendications précédentes, **caractérisé en ce que** les états de freinage respectifs des dispositifs de freinage (13) sont mesurés au moyen d'une technique fiable sur les entraînements de mouvement (9) par le dispositif de commande (3, 3', 3").

7. Procédé selon l'une des revendications précédentes, **caractérisé en ce qu'**au moins à certains des entraînements de mouvement (9) du robot industriel (2), correspondent des capteurs de position à valeurs absolues (12) qui sont réalisés à l'aide d'une technologie non fiable.

8. Procédé selon l'une des revendications précédentes, **caractérisé en ce que** les valeurs de position des capteurs de position à valeurs absolues (12), réalisés à l'aide d'une technologie non fiable, sont enregistrées en continu sur les entraînements de mouvement (9) du robot industriel (2) par le dispositif de commande (3, 3', 3") et, au cours d'une remise en service du robot industriel, il est vérifié, par le dispositif de commande (3, 3', 3"), si les valeurs de position enregistrées en dernier des divers entraînements de mouvement (9) coïncident ou non avec les valeurs de position des divers entraînements de mouvement (9), lues actuellement par les capteurs de position à valeurs absolues (12).

9. Procédé selon l'une des revendications précédentes, **caractérisé en ce que** le dispositif de commande (3, 3', 3") génère un statut de référencement de données du robot industriel (2), dans lequel le statut de référencement est ajusté comme « respecté » lorsque la position réelle du centre d'outil (TCP) du robot industriel coïncide avec les données de position du centre d'outil (TCP) du robot industriel sous-jacentes du dispositif de commande (3, 3', 3") et le statut de référencement est ajusté comme « non respecté » lorsque la position réelle mentionnée et les données de position mentionnées sont différentes.

10. Procédé selon l'une des revendications précédentes, **caractérisé en ce que** des instructions de fonctionnement organisationnelles sont interdites par des modifications de position initiées manuellement du centre d'outil (TCP) du robot industriel (2) lorsque, en lien avec une remise en service du robot industriel, un processus de référencement manuel avec le robot industriel est superflu.

11. Procédé selon l'une des revendications précédentes, **caractérisé en ce que** le dispositif de commande (3, 3', 3") initie ou met en oeuvre une remise en service du robot industriel (2) sans exécuter un processus de référencement lorsque les valeurs de position enregistrées et les valeurs de position lues au moment de la remise en service prévue du robot industriel, lues par les capteurs de position à valeurs absolues (12), sont identiques.

12. Procédé selon l'une des revendications précédentes, **caractérisé en ce que** le dispositif de commande (3, 3', 3") n'initie ou ne met en oeuvre une remise en service du robot industriel (2) qu'après une exécution d'un processus de référencement manuel lorsque les valeurs de position enregistrées sont différentes des valeurs de position lues par les capteurs de position à valeurs absolues (12) au moment de la remise en service prévue du robot industriel.

13. Procédé selon l'une des revendications précédentes, **caractérisé en ce que** le dispositif de commande (3, 3', 3") effectue une entrée d'erreur dans un fichier log lorsque les valeurs de position enregistrées sont différentes des valeurs de position lues par les capteurs de position à valeurs absolues (12) au moment de la remise en service prévue du robot industriel.

14. Procédé selon l'une des revendications précédentes, **caractérisé en ce que** le dispositif de commande (3, 3', 3") effectue une réinitialisation ou un effacement du statut de référencement du robot industriel (2) lorsque les valeurs de position enregistrées par le dispositif de commande (3, 3', 3") sont différentes des valeurs de position lues par les capteurs de position à valeurs absolues (12) au moment de la remise en service prévue du robot industriel.

15. Procédé selon l'une des revendications précédentes, **caractérisé en ce que** le dispositif de commande (3, 3', 3") exécute un module de fonction pouvant être activé et désactivé par un opérateur, ce module de fonction étant conçu pour l'autorisation et le blocage d'une remise en service au moins partiellement automatique ou entièrement automatique du robot industriel (2) sans nécessiter l'exécution d'un nouveau processus de référencement.

16. Robot industriel comprenant un dispositif de commande (3, 3', 3") pour le fonctionnement du robot industriel (2), **caractérisé en ce qu'**il est conçu pour l'exécution d'un procédé selon l'une ou plusieurs des revendications précédentes.
